(19) Europäisches Patentamt
European Patent Office
Office européen des brevets

(11) EP 1 988 438 B1

(12) EUROPÄISCHE PATENTSCHRIFT

(45) Veröffentlichungstag und Bekanntmachung des Hinweises auf die Patenterteilung:
**31.08.2011 Patentblatt 2011/35**

(51) Int Cl.:
***G05B 19/416*** (2006.01)   ***B23D 59/00*** (2006.01)

(21) Anmeldenummer: **08008213.4**

(22) Anmeldetag: **29.04.2008**

(54) **Verfahren zum Betrieb einer Werkzeugmaschine sowie Werkzeugmaschine**

Method for operating a machine tool and machine tool

Procédé destiné au fonctionnement d'une machine-outil et machine-outil

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **04.05.2007 DE 102007021070**

(43) Veröffentlichungstag der Anmeldung:
**05.11.2008 Patentblatt 2008/45**

(73) Patentinhaber: **Fraunhofer-Gesellschaft zur Förderung der angewandten Forschung e.V. 80686 München (DE)**

(72) Erfinder: **Jacubasch, Andreas 68789 St Leon-Rot (DE)**

(74) Vertreter: **Rösler, Uwe Rösler Patentanwaltskanzlei Landsberger Strasse 480a 81241 München (DE)**

(56) Entgegenhaltungen:
**EP-A- 0 905 593        DE-A1- 4 408 886**
**DE-A1- 10 304 405     DE-A1- 19 622 374**
**DE-A1- 19 807 898     DE-A1-102004 055 382**

## Beschreibung

## Technisches Gebiet

Die Erfindung bezieht sich ein Verfahren zum Betrieb einer Werkzeugmaschine, die Reibkraft beaufschlagt ein mittels eines motorischen Drehantriebes in Rotation versetzbares Werkzeug mit einer einstellbaren Vorschubgeschwindigkeit zu Zwecken eines Materialabtrages in oder gegen ein zu bearbeitendes Werkstück verfährt, bei dem auf der Grundlage einer am Drehantrieb wirkenden Motorleistung ein die Vorschubgeschwindigkeit bestimmender Wert ermittelt wird.

## Stand der Technik

Vorstehend bezeichnete Werkzeugmaschinen dienen zum abrasiven oder spanabhebenden Materialabtrag an Werkstücken, die bspw. im Rahmen eines Rohr- oder Schneidprozesses bearbeitet werden. Bohrmaschinen im Allgemeinen und so genannte Kernbohrmaschinen im Speziellen können ab einer gewissen Größe und ab einem gewissen Gewicht nicht mehr von einer Person manuell bedient werden und sind aus diesem Grunde an einem Bohrgeräterahmen befestigt. Für ihren Betrieb wird unter Vorgabe einer bestimmten Bohrmotorleistung ein Werkzeug (z. B. eine Kembohrkrone) mit einer gleichfalls vorgebbaren Drehzahl in Rotation versetzt und zu Zwecken eines möglichst effizienten Bohrvorganges mit einer entsprechend abgestimmten Vorschubgeschwindigkeit in das zu bearbeitende Werkstück kraftbeaufschlagt vorangetrieben.

Hierbei gilt es einerseits darauf zu achten, dass der motorische Antrieb des Bohrgerätes nicht überlastet wird, andererseits gilt es jedoch das Bohrergebnis möglichst rasch zu erreichen, unter Einhaltung bearbeitungsspezifischer Randbedingungen.

Eine vergleichbare Situation stellt sich bei Kreissägemaschinen dar, so insbesondere bei Sägemaschinen, die für Sägeaufgaben an aus sehr harten Materialien bestehenden Werkstücke ausgelegt sind, beispielsweise für Stein oder Beton-Materialien, bei denen es gilt das mit einer vorgegebenen Motorleistung in der Rotation versetzte Sägeblatt kraftbeaufschlagt mit einer entsprechenden Vorschubgeschwindigkeit durch das zu zerteilende Werkstück zu treiben und dies gleichsam auch unter der Prämisse der Vermeidung einer Überlastung des motorischen Antriebes und zugleich der Ermöglichung einer möglichst hohen Vorschubgeschwindigkeit, d.h. Schnittgeschwindigkeit, mit der das Sägeblatt durch das zu bearbeitende Werkstück getrieben wird.

Die weiteren Ausführungen nehmen vorzugsweise bezug auf Werkzeugmaschinen in Ausbildung eines Bohrgerätes, gleichwohl können die damit verbundenen Zusammenhänge und Erkenntnisse auch auf Kreissägemaschinen, beispielsweise Betonkreissägemaschinen übertragen werden.

Der derzeitige Stand der Technik hinsichtlich der Betriebsweise obiger Werkzeugmaschinen stellt sich wie folgt dar.

Aus der DE 94 02 360 ist ein gattungsgemäßes Bohrgerät entnehmbar, das eine automatische Anpassung der Bohrer-Vorschubgeschwindigkeit an die jeweils in dem zu bearbeitenden Werkstück anzutreffenden Werkstückhärten vornimmt. Hierzu ist an dem das Bohrwerkzeug in Rotation versetzenden motorischen Antrieb ein elektrischer Lastfühler vorgesehen, dessen Fühlerausgang über eine Steuer bzw. Regeleinheit mit einer die Vorschubgeschwindigkeit des Bohrers bestimmenden Antriebseinheit verbunden ist.

In der DE 196 32 401 A1 ist gleichfalls ein Bohrgerät in Form einer Kembohrmaschine beschrieben, die einen das Bohrwerkzeug in das Werkstück axial verschiebenden Vorschubmotor vorsieht, der von einer Regeleinheit variabel betrieben wird, wobei zur Regelung wenigstens zwei der nachfolgenden Betriebsgrößen zugrunde gelegt werden: Werkzeug-Vorschubkraft, Werkzeug-Drehmoment sowie Werkzeug-Drehzahl. Das Regelungsziel besteht darin, die Werkzeugdrehzahl bzw. das Werkzeugdrehmoment und die Werkzeugvorschubkraft bei jeder Werkstückhärte so aufeinander abzustimmen, dass die Vorschubgeschwindigkeit maximiert wird.

Der DE 198 07 899 A1 ist eine Kernbohrmaschine mit einer Steuerung bzw. Regelung des Vorschubweges für den Kernbohrer zu entnehmen, wobei der Vorschubweg unter Zugrundelegung eines Soll-Ist-Werte-Vergleiches hinsichtlich der am Drehantrieb anliegenden Drehzahl bestimmt wird. Im Einzelnen kann durch Abspeichern entsprechender Positions-Bezugspunkte und des jeweils ermittelten Vorschubweges die Bohriochtiefe bestimmt werden.

Schließlich wird in der DE 103 04 405 A1 eine vorschubgeregelte Kembohrmaschine beschrieben, deren Regelung auf Basis des am Drehantrieb wirkenden Drehmomentes sowie der an der Bohrkrone anliegenden Anpresskraft durchgeführt wird. Zur Regelung werden somit zwei unabhängige Ist-Größen erfasst. Ein erster Sensor erfasst einen ersten, zur elektrischen Leistungsaufnahme bzw. dem Drehmoment eineindeutigen, Regelparameter. Der zweite Sensor erfasst die Anpresskraft der Kembohrkrone. Aus den zwei erfassten Parametern wird ein untergrundspezifischer Reibungskoeffizient berechnet, der als Regelparameter dient.

Die DE 196 22 374 A1 beschreibt die Regelung der Zerspanungsleistung einer Säge, die unabhängig von der Querschnittsform und von den Materialeigenschaften eines zu durchtrennenden Werkstücks eine günstige Ausnutzung der Abgabeleistung eines Sägeblattantriebes und eine hohe Schnittqualität ermöglicht. Dazu werden sowohl die Stromaufnahme des Sägeblattantriebes als auch die Drehzahl des Sägeblatts gemessen; es werden also wiederum zwei Ist-Werte erfasst. In Abhängigkeit der Stromaufnahme wird die Vorschubgeschwindigkeit so verändert, dass die Leistungsabgabe des Sägeblattantriebes einem Sollverlauf entspricht, wobei gleichzeitig die Drehzahl möglichst konstant gehalten wird.

Die EP 0 905 593 A1 beschreibt eine numerische Steuerung für eine komplex aufgebaute Bearbeitungsvorrichtung. Es handelt sich um ein relativ zu einem Werkstück um mehrere Raumachsen relativ bewegliches Schneidwerkzeug, dessen räumliche Lage relativ zum Werkstück mit Hilfe von Verstellmotoren kontrolliert werden kann. Ein Optimierungsvorgang wird durchgeführt, für den die numerische Steuerung auf mehrere Messgrößen zurückgreift.

**Darstellung der Erfindung**

Der Erfindung liegt die Aufgabe zugrunde, ein Verfahren zum Betrieb einer Werkzeugmaschine, die reibkraftbeaufschlagt ein mittels eines motorischen Drehantriebes in Rotation versetzbares Werkzeug mit einer einstellbaren Vorschubgeschwindigkeit zu Zwecken eines Materialabtrages in oder gegen ein zu bearbeitendes Werkstück verfährt, bei dem auf der Grundlage einer am Drehantrieb wirkenden Motorleistung ein die Vorschubgeschwindigkeit bestimmender Wert ermittelt wird, derart weiterzubilden, dass eine für den jeweiligen Materialabtrag optimale Drehzahl- und Drehmomenteinstellung während eines Bearbeitungsprozesses kontinuierlich und unterbrechungsfrei unter Zugrundelegung eines minimalen Regelungsaufwandes automatisch möglich wird. So gilt es während des Materialabtrageprozesses bei sich einstellenden Änderungen in der zu bearbeitenden Materialhärte oder bezüglich der Änderung eines Werkzeuges die jeweils optimalen Drehzahl-/Drehmomentpaarungen automatisch zu ermitteln und am Bohrgerät automatisch einzustellen und dies mit einem möglichst geringen Regelungsaufwand. Darüber hinaus gilt es eine entsprechend konfektionierte Werkzeugmaschine anzugeben, mit der die Realisierung des vorstehend bezeichneten Materialabtragevorganges möglich wird.

Die Lösung der der Erfindung zugrunde liegenden Aufgabe ist im Anspruch 1 angegeben. Gegenstand des Anspruches 13 ist eine lösungsgemäße Werkzeugmaschine. Den Erfindungsgedanken vorteilhaft weiterbildende Merkmale sind Gegenstand der Unteransprüche sowie der weiteren Beschreibung insbesondere unter Bezugnahme auf die Ausführungsbeispiele zu entnehmen.

Lösungsgemäß zeichnet sich ein Verfahren zum Betrieb einer Werkzeugmaschine, die Reibkraft beaufschlagt ein mittels eines motorischen Drehantriebes in Rotation versetzbares Werkzeug mit einer einstellbaren Vorschubgeschwindigkeit zu Zwecken eines Materialabtrages in oder gegen ein zu bearbeitendes Werkstück verfährt, bei dem auf der Grundlage einer am Drehantrieb wirkenden Motorleistung ein die Vorschubgeschwindigkeit bestimmender Wert ermittelt wird, dadurch aus, dass auf der Grundlage der Motorleistung sowie des ermittelten Wertes zur Bestimmung der Vorschubgeschwindigkeit eine Schätzung bezüglich wenigstens eines das Werkzeug charakterisierenden Parameters, im folgenden kurz Werkzeugparameter genannt, sowie wenigstens eines das Werkstück charakterisierenden Parameters, im folgenden kurz Werkstückparameter genannt, durchgeführt wird. Hierbei charakterisieren der wenigstens eine Werkzeug- und der Werkstückparameter den Materialabtrag. Typischerweise charakterisiert der Werkstückparameter die jeweilige Härte des zu bearbeitenden Werkstückes; so kann anhand des Werkstückparameters unterschieden werden, ob der aktuell bearbeitete Materialbereich beispielsweise aus sprödhartern Beton oder aus einem weitaus widerstandsfähigerem Metall, beispielsweise einem Armierungsstahl besteht. Der Werkzeugparameter beinhaltet beispielsweise die Größe des den Materialabtrag bestimmenden Werkzeuges, beispielsweise Bohrerdurchmesser oder Schnittflächengröße bzw. -breite. Lösungsgemäß wird ferner wenigstens auf der Grundlage des Werkzeugparameters sowie des Werkstückparameters und unter Verwendung wenigstens eines Referenzdatensatzes ein Sollwert für eine dem Drehantrieb zuordenbare Drehzahl sowie ein Sollwert für die Motorleistung des Drehantriebes ermittelt. Beide Sollwerte werden zur Regelung der am Drehantrieb wirkenden Motorleistung und dessen Drehzahl verwendet.

Das lösungsgemäße Verfahren basiert somit lediglich auf einer einzigen Messgröße, nämlich der Erfassung der am Drehantrieb wirkenden Motorleistung, die äquivalent ist zu dem am Drehantrieb wirkenden Motor- bzw. Drehmoment. Es ist erkannt worden, dass ein schnellstmögliches Durchdringen bzw. ein schnellstmöglicher Materialabtrag mittels eines Bohr- oder Schneidwerkzeuges, bei gleichzeitiger Berücksichtigung größtmöglicher Werkzeugschonung, in unterschiedlich harten Werkstückarten dann gewährleistet werden kann, wenn die Werkzeug-Drehzahl und das Werkzeug-Drehmoment jeweils auf die entsprechenden Werkstückverhältnisse sowie die Werkzeugdurchmesser angepasst werden.

Zur Erläuterung der lösungsgemäßen Anpassung von Drehzahl und Drehmoment bzw. der Motorleistung des Drehantriebes sei auf das im Weiteren unter Bezugnahme auf die Bilddarstellung beschriebene Regelkonzept verwiesen.

Auf der Grundlage des lösungsgemäßen Regelkonzeptes ist somit die Ausbildung konkreter Werkzeugmaschinen möglich, die in konkreter Ausführungsform als Kernbohrwerkzeug oder als Kreisbetonsäge ausgebildet sein können.

Eine derartige Werkzeugmaschine, die reibkraftbeaufschlagt ein mittels eines motorischen Drehantriebes in Rotation versetzbares Werkzeug mit einer einstellbaren Vorschubgeschwindigkeit zu Zwecken eines Materialabtrages in oder gegen ein zu bearbeitendes Werkstück verfährt, bei der darüber hinaus eine Regelungseinheit vorgesehen ist, in der auf der Grundlage einer am Drehantrieb wirkenden Motorleistung ein die Vorschubgeschwindigkeit bestimmender Wert ermittelbar ist, zeichnet sich lösungsgemäß dadurch aus, dass ein Klassifikator vorgesehen ist, der auf der Grundlage der Motorleistung sowie des ermittelten Wertes zur Bestimmung der Vorschubgeschwindigkeit jeweils einen Schätzwert für wenigstens einen, das Werkzeug charakterisierenden Parameter, kurz Werkzeugparameter, sowie wenigstens einen das Werkstück charakterisierenden Parameter, kurz Werkstückparameter, ermittelt. Darüber hinaus ist eine Vergleichseinheit vorgesehen, die auf der Grundlage der jeweiligen Schätzwerte für die Werkzeug- und Werkstückparameter unter Verwendung wenigstens eines Referenzdatensatzes einen Sollwert für eine den Drehantrieb zuordenbare Drehzahl sowie ein Sollwert für die Motorleistung des Drehantriebes ermittelt. Schließlich ist noch eine Anpassungseinheit vorgesehen, die die Drehzahl und die Motorleistung des Drehantriebes jeweils an den ermittelten Sollwert für die Drehzahl sowie den Sollwert für die Motorleistung des Drehantriebes anpasst. Weitere Einzelheiten zur Ausbildung konkreter Werkzeugmaschinen können gleichfalls der nachfolgenden Beschreibung unter Bezugnahme auf konkrete Ausführungsbeispiele entnommen werden.

**Kurze Beschreibung der Erfindung**

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

Fig. 1 Blockschaltbild für das lösungsgemäße Regelkonzept,

Fig. 2 Prinzipbild für ein Kembohrgerät, sowie

Fig. 3 Prinzipbild für eine Betonkreissägemaschine.

**Wege zur Ausführung der Erfindung, gewerbliche Verwendbarkeit**

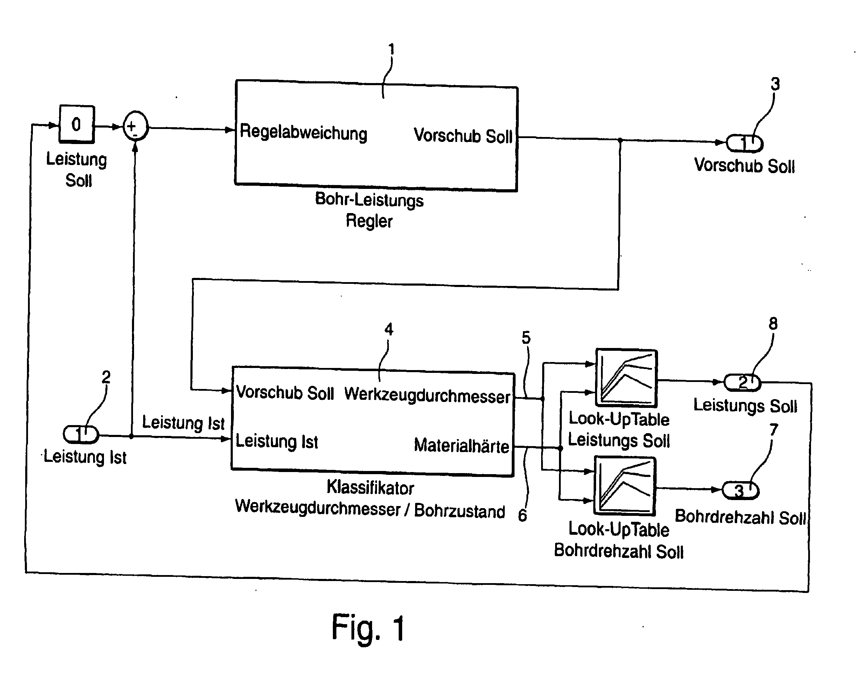

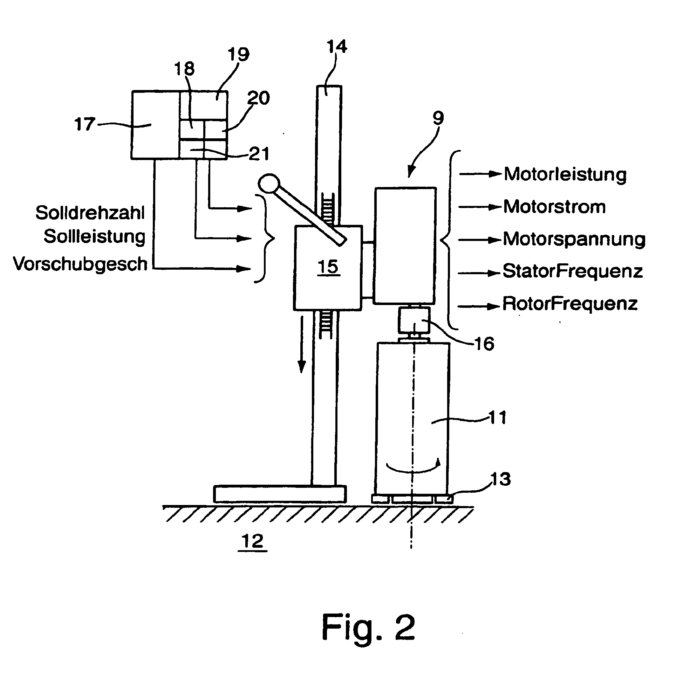

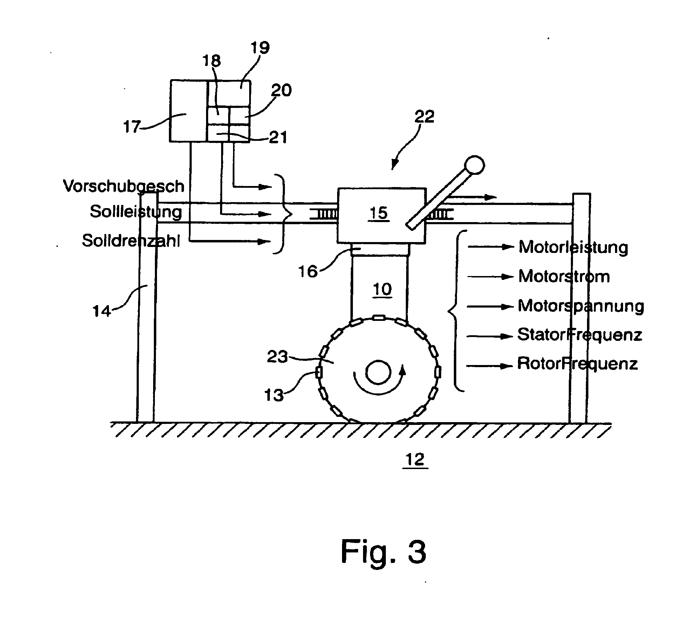

In Figur 1 ist ein Blockschaltbild für ein lösungsgemäßes Regelkonzept für den Betrieb einer Werkzeugmaschine, vorzugsweise in Form einer Kembohrmaschine oder einer Betonsägemaschine, wie sie unter Bezugnahme auf die nachstehenden Figuren 2 und 3 im einzelnen näher erläutert werden. Das lösungsgemäße Regelkonzept läßt sich grundsätzlich auf jegliche Art von für den Materialabtrag an Werkstücken konzipierten Werkzeugmaschinen anwenden, unabhängig davon, ob es sich um einen abrasiven, spanabhebenden oder sonstigen Materialabtrag handelt, der grundsätzlich auf Basis eines körperlichen in Kontakt treten wenigstens eines Werkzeuges mit einem zu bearbeitenden Werkstück beruht.

Das lösungsgemäße Regelkonzept zeichnet sich durch die Erfassung lediglich einer einzigen, den Materialabtrageprozess charakterisierenden Messgröße aus und dient einem zeitlich optimierten Materialabtrageprozess unter weitgehender Schonung von Werkzeugmaschinenkomponenten, insbesondere das unmittelbar mit dem zu bearbeitenden Werkstück in Wirkverbindung tretenden Werkzeuges selbst.

Das in Figur 1 dargestellte Blockschaltbild stellt ein Regelkonzept für eine Werkzeugmaschine zum Materialabtrag mit automatischer Vorschubsteuerung dar, bei der eine wichtige Komponente, der sogenannte Drehmotorleistungsregler 1 darstellt, der aus der aktuellen Ist-Leistung 2, die vom Drehmotor abgegeben wird, eine Vorschubgeschwindigkeitsstellgröße 3. mit der das entsprechende Werkzeug in oder gegen das zu bearbeitende Werkstück geführt wird, berechnet. Der Zusammenhang zwischen der Geschwindigkeitsstellgröße 3 und der am Drehantrieb abgeforderten Motorleistung 1 ist nicht linear und zudem von großen Parameterschwankungen unterworfen, die beispielsweise von der Härte des zu bearbeitenden Werkstückes sowie des jeweils eingesetzten Werkzeuges abhängen. Trifft beispielsweise ein Bohrwerkzeug beim Durchdringen eines Betonwerkstückes auf einen metallischen Gegenstand, beispielsweise auf einen innerhalb des Betonwerkstückes verbauten Armierungsstahls, so gilt es die Vorschubgeschwindigkeit des Bohrwerkzeuges abrupt zu reduzieren. Durch die sich zum Teil innerhalb kurzer Zeit verändernden Bearbeitungsverhältnisses gilt es die Reglerverstärkung des Drehmotorteistungsreglers 2 adaptiv auszugestalten.

Auf der Grundlage der in der vorstehenden Weise ermittelten Geschwindigkeitsstellgröße 3 für den Vorschub sowie der aktuellen Ist-Leistung 2 am Drehantrieb der Werkzeugmaschine werden im Rahmen eines Klassifikators 4 Schätzwerte für einen das Werkzeug charakterisierenden Parameters sowie eines die Werkstückhärte charakterisierenden Parameters ermittelt. Sei beispielsweise angenommen, dass es sich bei der Werkzeugmaschine um ein Kembohrgerät handelt, so liefert der Klassifikator 4 auf der Grundlage der bekannten Ist-Motorleistung 2 des Drehantriebes sowie der ermittelten Geschwindigkeitsstellgröße 3 für den Vorschub einen Schätzwert 5 für den Werkzeugparameter in Form eines Bohrkronendurchmessers sowie einen Schätzwert 6 für den Werkstückparameter in Form der Bohrguthärte, d.h. handelt es sich bei dem zu bearbeitenden Werkstück um Beton oder um eine Stahlarmierung.

Auf der Grundlage beider Schätzwerte für den Werkzeugparameter 5 sowie des Werkstückparameters 6 werden unter zu Hilfenahme sogenannter Look-Up-Tafeln 5' und 6', die das Prozess-Know-how repräsentieren, Sollwerte für die Bohrmaschinendrehzahl 7 und der Bohrmaschinenleistung bzw. Motormoment 8 ermittelt, die als Einstellgrößen für die Werkzeugmaschine dienen. Auf diese Weise läßt sich eine automatische Anpassung von Bohrmaschinendrehzahl und der Bohrmaschinenleistung bzw. dem Motormoment erreichen, um letztlich eine optimale Auslastung des Gesamtsystems zu erzielen.

Dem vorstehenden Regelkonzept liegt eine Vielzahl einzelner Erkenntnisse zugrunde, von denen die wichtigsten nachstehend kurz geschildert werden. So ist die abgeforderte Drehmaschinenmotorleistung $M_B$ proportional zu einer Funktion g aus Vorschubgeschwindigkeit v, Mantelfläche $A_M$ einer Bohrkrone und der momentan wirkenden Bohrguthärte h, also ein Unterscheidungskriterium für Beton oder Stahlarmierung. Bei einer bekannten Ist-Motorleistung $M_B$, d.h. einem bekannten vom Drehantrieb des Bohrmotors aufzubringenden Drehmoment, sowie einer bekannten Vorschubgeschwindigkeit v kann letztlich auf den Bohrerdurchmesser d sowie die Bohrguthärte h geschlossen werden.

$$M_B = g(A_M ,v,h)$$
$$\approx h * A_M * v$$

$A_M$ = Mantelfläche
$M_B$ = Bohrmotorleistung
v = Vorschubgeschwindigkeit
h = Bohrguthärte

$$h * A_M \approx \frac{M_B}{v}$$

Die vorstehenden Beziehungen zeigen, dass das Produkt aus Bohrguthärte h und der Mantelfläche $A_M$ einer Bohrkrone ungefähr gleich dem Koeffizienten aus gemessener Bohrmotorleistung $M_B$ und der wirkenden Vorschubgeschwindigkeit v ist. Zwischen der Mantelfläche der Bohrkrone und dem Bohrkronendurchmesser d besteht hingegen folgender Zusammenhang:

$$A_M = \pi * (d * \delta - \delta^2)$$

d = Werkeugdduchmesser
δ = Wandstärkedes Werkzeugs

$$für \; d \; >> \; \delta \; gilt :$$
$$A_M \approx \pi * d * \delta$$

Es zeigt sich, dass die zu bohrende Mantelfläche $A_M$ quasi linear mit zunehmendem Bohrdurchmesser d des Werkzeuges ansteigt, unter der Voraussetzung, dass sich die Wandstärke der Bohrkrone nicht ändert. Wird die Näherung der Mantelfläche aus der vorangegangenen Formel in die erste Formel eingesetzt, so ergibt sich folgender Zusammenhang:

$$h * \pi * d * \delta \approx \frac{M_B}{v}$$

M = Bohrmoment
$\phi_i$ = Proportionalitätsfaktor(korstant)
v = Sollgeschwindigkeit des Vorschubes

$$\phi_i * h * d \approx \frac{M_B}{v}$$

Das Produkt aus Bohrguthärte h und Bohrkronendurchmesser d einer Bohrkrone ist somit proportional zum Koeffizienten aus gemessener Bohrmotorleistung $M_B$ unter wirkender Vorschubgeschwindigkeit v.
Im Falle einer Kreissägenmaschinenschneidmaschine lassen sich entsprechende Zusammenhänge aufstellen.
In der Regel ist vor Beginn einer neuen Bohrung der Bohrkronendurchmesser d zunächst unbekannt. Nach dem Start der Bohrung, d.h. im ersten Kontakt zwischen Bohrkrone und Bohrgut, steigt die Drehmotorleistung der Bohrmaschine $M_B$ über die Leerlaufleistung an. Für diese erste Startphase wird vorausgesetzt, dass der Bohrvorgang im Beton mit einer bekannten Betonhärte $h_B$ stattfindet. Sind hingegen $h_B$, $M_B$ sowie auch v bekannt, so kann der Bohrkronendurchmesser d geschätzt werden. Dieser Bohrkronendurchmesser d ist für die gesamte weitere Bohrung bekannt und bleibt konstant. Auftretende Schwankungen bezüglich des Koeffizienten aus Drehmotorleistung $M_B$ sowie der wirkenden Vorschubgeschwindigkeit v sind im weiteren Verlauf des aktuellen Bohrvorganges ausschließlich verursacht aus
Änderungen der Bohrguthärte h, die dabei aus der obigen Formel aus den anderen bekannten Größen ableitbar ist. Mit den bekannten Größen des Bohrkronendurchmessers d sowie der Bohrguthärte h lassen sich aus diesen, wie vorstehend bezeichnet Werkzeug- und Werkstückparametern unter Zuhilfenahme von den Look-Up-Tafeln 5'. 6' die Sollwerte für die Bohrmaschinendrehzahl 8 sowie die Bohrmaschinenleistung 7 ermittelt, die wie vorstehend erläutert, zur Einstellung der Betriebsweise der Bohrmaschine an diese rückgeführt werden.
Des Weiteren lässt sich zusätzlich die Bohrlochtiefe abschätzen, indem zeitlich die ermittelten Geschwindigkeitsstellgrößen für den Vorschub aufkumuliert werden. Hierdurch kann der Bohrfortschritt indirekt erfasst werden, wodurch die Bohrposition geschätzt werden kann. In besonders vorteilhafter Weise kann der Motorleistungsregler 1 gemäß Figur 1, der über die Vorschubgeschwindigkeit die Antriebsleistung des Drehantriebes regelt, als modifizierter PID-Regelalgorithmus mit sogenannter Anti-Windup-Funktion für den Integralanteil ausgebildet werden. Zur Kompensation starker Parameterschwankungen längs der Regelstrecke werden die Regelparameter zudem situationsabhängig adaptiert.
In Figur 2 ist eine Prinzipdarstellung für eine Kembohrwerkzeugmaschine 9 gezeigt, die einen Drehmotor 10 vorsieht, an den eine Bohrkrone 11 anflanschbar ist, die radial oder axial zu einem Werkstück 12 orientierte Schneiden 13 vorsieht. Die Kembohrmaschine 9 ist an einer Halterung 14 geführt, längs der ein Vorschubantrieb 15 vorgesehen ist, der die Kembohrmaschine 9 axial in Richtung des zu bearbeitenden Werkstückes 12 kontrolliert verfährt. Ferner ist am Drehantrieb 10 ein Sensor 16 für die Ist-Motorleistung vorgesehen, dessen Sensorsignal an eine Regeleinheit 17 geführt wird, in der ein Geschwindigkeitssollwert für den Vorschub des Vorschubantriebes 15 ermittelt wird. Zudem ist ein Klassifikator 18 vorgesehen, der auf der Grundlage der ermittelten Soll-Vorschubgeschwindigkeit v sowie der erfaßten Ist-Motorleistung Schätzwerte 19, 20 für die Größe des verwendeten Bohrwerkzeuges sowie auch der Werkstückhärte (Beton oder Stahl) ermittelt. Letztlich ist zudem auch eine Schätzwertkomponente 21 zur Bestimmung der aktuellen Bohrlochtiefe vorgesehen. Mit den vorstehenden Klassifikationsergebnissen läßt sich unter Verwendung geeigneter Look-Up-Tafeln, in denen grundsätzliches Know-how über den gesamten Bohrprozess enthalten sind, sowohl der Drehantrieb 10 als auch der Vorschubantrieb 15 optimal auf den jeweiligen Zustand an entsprechenden Arbeitspunkten einstellen.

In äquivalenter Weise ist eine entsprechende Betonkreissägemaschine 22 gemäß Figur 3 ausgebildet, bei der im Unterschied zu der Kembohrmaschine ein Kreissägeblatt 23 kraftbeaufschlagt längs eines Werkstückes 12 geführt wird. Auch in diesem Fall sorgt ein Vorschubantrieb 15 für eine Schnittführung durch das Werkstück 12, deren Länge äquivalent anzusehen ist mit der Bohrlochtiefe bei der Kembohrmaschine gemäß Figur 2. Ansonsten sind die für die Regelung erforderlichen Komponenten identisch zu jenen ausgebildet, die unter Bezugnahme zu Figur 2 bereits beschrieben worden sind. Somit wird um Wiederholungen zu vermeiden auf eine Zusammenschau vergleichbarer Komponenten verwiesen.

Der besondere Vorteil der vorschubgeregelten Kembohrmaschine bzw. Kreissägemaschine besteht darin, dass Betonbohr bzw. Betonschneidarbeiten voll automatisch durchgeführt werden können. Hierbei stellt sich die Werkzeugmaschine jeweils selbstständig sowohl auf unterschiedliche Werkzeuggrößen als auch auf wechselnde Materialhärten des zu bearbeitenden Werkstückes optimal ein. Zudem wird die Bohrlochtiefe bzw. die Schnittlänge aus den internen Zuständen der Steuerung abgeschätzt. Diese Schätzungen können zu verschiedenen Aufgaben verwendet werden, beispielsweise für das Anfahren relativer Positionen oder das Beenden von Bohrungen in definierten Tiefen bzw. nach entsprechender erreichter Schnittlänge. Auch in diesem Fall sind keine weiteren Sensoren, wie beispielsweise Wegaufnehmer erforderlich, so dass der Hauptvorteil des lösungsgemäßen Regelungskonzeptes darin zu sehen ist, dass lediglich ein einziger Sensorwert, nämlich die Leistung des Drehantriebes oder ein von dieser Leistung funktional abhängiger Wert zugrundegelegt wird. Bevorzugtes Einsatzgebiet des lösungsgemäßen Regelungskonzeptes betrifft das Betonbohren, Gesteinsbohren, Betonsägen, Gesteinssägen, Tunnelbohrmaschinen, Ständerbohrmaschinen mit automatischem Vorschub, sowie Bohrsysteme allgemein.

**Bezugszeichenliste**

| 1 | Drehantriebsleistungsregler. Motorleistungsregler |
|---|---|
| 2 | Ist-Motorteistung |
| 3 | Geschwindigkeitsstellgröße für den Vorschub |
| 4 | Klassifikator |
| 5 | Werkzeugparameter |
| 6 | Werkstückparameter |
| 5' | Look-Up-Tafel für Drehmoment am Drehantrieb |
| 6' | Look-Up-Tafel für Drehzahl |
| 7 | Solldrehmoment |
| 8 | Solldrehzahl |
| 9 | Kembohrmaschine |
| 10 | Drehmotor |
| 11 | Kembohrkrone |
| 12 | Werkstück |
| 13 | Schneiden |
| 14 | Werkstück |
| 15 | Vorschubantrieb |
| 16 | Sensor für Motorleistung |
| 17 | Motorleistungsregler |
| 18 | Klassifikator |
| 19,20 | Schätzwerte für Drehzahl und Drehleistung |
| 21 | Schätzwert für Bohrlochtiefe |
| 22 | Betonsägemaschine |
| 23 | Kreissägeblatt |

**Patentansprüche**

1. Verfahren zum Betrieb einer Werkzeugmaschine, die Reibkraft beaufschlagt ein mittels eines motorischen Drehantriebes in Rotation versetzbares Werkzeug mit einer einstellbaren Vorschubgeschwindigkeit zu Zwecken eines Materialabtrages in oder gegen ein zu bearbeitendes Werkstück verfährt, bei dem

   auf der Grundlage einer am Drehantrieb wirkenden Motorleistung ein die Vorschubgeschwindigkeit bestimmender Wert ermittelt wird,

   **dadurch gekennzeichnet, dass** auf der Grundlage der Motorleistung oder einer von dieser Leistung funktional abhängiger Wert als einzige Messgröße sowie des ermittelten Wertes zur Bestimmung der Vorschubgeschwindigkeit eine Schätzung bezüglich wenigstens eines das Werkzeug charakterisierenden Parameters, kurz Werkzeugparameter, sowie wenigstens eines das Werkstück charakterisierenden Parameters, kurz Werkstückparameter, durchgeführt wird, wobei der wenigstens eine Werkzeug- und der

   Werkstückparameter den Materialabtrag charakterisieren, und

   dass wenigstens auf der Grundlage des Werkzeug- und Werkstückparameters unter Verwendung wenigstens eines Referenzdatensatzes ein Sollwert für eine dem Drehantrieb zuordenbare Drehzahl sowie ein Sollwert für die Motorleistung des Drehantriebes ermittelt werden.

2. Verfahren nach Anspruch 1,
   **dadurch gekennzeichnet, dass** die zur Motorleistung äquivalente Größe ein dem Drehantrieb zuordenbares Drehmoment ist.

3. Verfahren nach einem der Ansprüche 1 bis 2,
   **dadurch gekennzeichnet, dass** der ermittelte Sollwert für die dem Drehantrieb zuordenbare Drehzahl sowie der Sollwert für die Motorleistung zur Regelung der am Drehantrieb wirkenden Motorleistung und dessen Drehzahl verwendet werden.

4. Verfahren nach einem der Ansprüche 1 bis 3,
   **dadurch gekennzeichnet, dass** als Werkzeugparameter ein den Materialabtrag bestimmender Geometrieparameter des Werkzeuges gewählt wird.

5. Verfahren nach einem der Ansprüche 1 bis 3,
   **dadurch gekennzeichnet, dass** als Werkstückparameter eine die Härte des Werkstückes charakterisierender Parameter gewählt wird.

6. Verfahren nach einem der Ansprüche 1 bis 5,
   **dadurch gekennzeichnet, dass** für den wenigstens einen Referenzdatensatz eine Look-Up-Tafel verwendet wird.

7. Verfahren nach einem der Ansprüche 1 bis 6,
   **dadurch gekennzeichnet, dass** eine den Materialabtrag quantitativ beschreibende Größe ermittelt wird, indem eine zeitliche Summation über die die Vorschubgeschwindigkeit bestimmenden Werte durchgeführt wird.

8. Verfahren nach Anspruch 7,
   **dadurch gekennzeichnet, dass** auf der Grundlage der den Materialabtrag quantitativ beschreibenden Größe eine Schätzung über die räumliche Position des Werkzeuges relativ zum Werkstück durchgeführt wird.

9. Verfahren nach einem der Ansprüche 1 bis 8,
   **dadurch gekennzeichnet, dass** als Werkzeugmaschine eine Kernbohrmaschine verwendet wird, in die als Werkzeug eine Kembohrkrone einsetzbar ist, und

   dass als Werkzeugparameter der Durchmesser der Bohrkrone gewählt wird.

10. Verfahren nach einem der Ansprüche 1 bis 8,
    **dadurch gekennzeichnet, dass** als Werkzeugmaschine eine Kreissägeblattmaschine verwendet wird, bei der ein Kreissägeblatt in ein Werkstück getrieben wird, und dass als Werkzeugparameter die am Werkstück wirkende Schneidfläche des Kreissägeblattes gewählt wird.

11. Verfahren nach einem der Ansprüche 1 bis 10,
    **dadurch gekennzeichnet, dass** bei der Schätzung bezüglich des wenigstens einen das Werkzeug charakterisierenden Parameters sowie des wenigstens einen das Werkstück beschreibenden Parameters jeweils eine Klassifizierung vorgenommen wird, bei der die ermittelten Parameter jeweils Werkzeug- oder Werkstückklassen angeben, d.h. der das Werkstück charakterisierende Parameter gibt an, ob es sich um Beton oder einen metallischen Werkstoff handelt, und der das Werkzeug charakterisierende Parameter gibt an, zu welcher Größenklasse ein entsprechendes Werkzeug gehört.

12. Werkzeugmaschine, die Reibkraft beaufschlagt ein mittels eines motorischen Drehantriebes in Rotation versetzbares Werkzeug mit einer einstellbaren Vorschubgeschwindigkeit zu Zwecken eines Materialabtrages in oder gegen ein zu bearbeitendes Werkstück verfährt, bei der eine Regelungseinheit vorgesehen ist, in der auf der Grundlage einer am Drehantrieb wirkenden Motorleistung ein die Vorschubgeschwindigkeit bestimmender Wert ermittelbar ist, **dadurch gekennzeichnet, dass** ein Klassifikator vorgesehen ist, der auf der Grundlage eines einzigen Sensorwertes, nämlich der Motorleistung oder ein von dieser Leistung funktional abhängiger Wert, sowie des ermittelten Wertes zur Bestimmung der Vorschubgeschwindigkeit jeweils einen Schätzwert für wenigstens einen, das Werkzeug charakterisierenden Parameter, kurz Werkzeugparameter, sowie wenigstens einen das Werkstück charakterisierenden Parameter, kurz Werkstückparameter ermittelt, und

dass eine Vergleichseinheit vorgesehen ist, die auf der Grundlage der jeweiligen Schätzwerte für die Werkzeug- und Werkstückparameter unter Verwendung wenigstens eines Referenzdatensatzes einen Sollwert für eine dem Drehantrieb zuordenbare Drehzahl sowie einen Sollwert für die Motorleistung des Drehantriebes ermittelt, und

dass eine Anpassungseinheit vorgesehen ist, die die Drehzahl und die Motorleistung des Drehantriebes jeweils an den ermittelten Sollwert für die Drehzahl sowie den Sollwert für die Motorleistung des Drehantriebes anpasst.

**Claims**

1. Method for operating a machine tool, which, acted on by friction, moves a tool which can be set in rotation by means of a motorised rotary drive into or against a workpiece to be machined for the purpose of removing material at a feed speed which can be set, in which method a value which defines the feed speed is determined on the basis of a motor power effective at the rotary drive, **characterised in that**, on the basis of the motor power or a value functionally dependent on the said power as the only measured variable and the determined value for defining the feed speed, an estimation is carried out with respect to at least one parameter which characterises the tool, tool parameter for short, and at least one parameter which characterises the workpiece, workpiece parameter for short, wherein the at least one tool parameter and the workpiece parameter characterise the removal of material, and that at least on the basis of the tool and workpiece parameters, a target value for a rotation speed which can be assigned to the rotary drive and a target value for the motor power of the rotary drive are determined using at least one reference data set.

2. Method according to Claim 1, **characterised in that** the variable equivalent to the motor power is a torque which can be assigned to the rotary drive.

3. Method according to one of Claims 1 to 2, **characterised in that** the determined target value for the rotation speed which can be assigned to the rotary drive and the target value for the motor power are used for regulating the motor power effective at the rotary drive and the rotation speed thereof.

4. Method according to one of Claims 1 to 3, **characterised in that** a geometric parameter of the tool which defines the removal of material is selected as the tool parameter.

5. Method according to one of Claims 1 to 3, **characterised in that** a parameter which characterises the hardness of the workpiece is selected as the workpiece parameter.

6. Method according to one of Claims 1 to 5, **characterised in that** a look-up table is used for the at least one reference data set.

7. Method according to one of Claims 1 to 6, **characterised in that** a variable which quantitatively describes the removal of material is determined **in that** a chronological summation is carried out using the values defining the feed speed.

8. Method according to Claim 7, **characterised in that** an estimation of the spatial position of the tool relative to the workpiece is carried out on the basis of the variable which quantitatively describes the removal of material.

9. Method according to one of Claims 1 to 8, **characterised in that** a core drill into which a core drill bit can be inserted as the tool is used as the machine tool and that the diameter of the drill bit is selected as the tool parameter.

10. Method according to one of Claims 1 to 8, **characterised in that** a circular saw in which a circular saw blade is driven into a workpiece is used as the machine tool, and that the cutting edge of the circular saw blade effective at the workpiece is selected as the tool parameter.

11. Method according to one of Claims 1 to 10, **characterised in that**, during each estimation with respect to the at least one parameter characterising the tool and the at least one parameter describing the workpiece, a classification is carried out, during which the determined parameters each specify tool or workpiece classes, i.e. the parameter characterising the workpiece specifies whether it is concrete or a metallic material, and the parameter characterising the tool specifies the size class to which a corresponding tool belongs.

12. Machine tool, which, acted on by friction, moves a tool which can be set in rotation by means of a motorised rotary drive into or against a workpiece to be machined for the purpose of removing material at a feed speed which can be set, in which machine tool a regulation unit is provided in which a value which defines the feed speed can be determined on the basis of a motor power effective at the rotary drive, **characterised in that** a classifier is provided which, on the basis of a single sensor value, namely the motor power or a value functionally dependent on the said power, and the determined value for defining the feed speed, in each case determines an estimated value for at least one parameter which characterises the tool, tool parameter for short, and at least one parameter which characterises the workpiece, workpiece parameter for short, and

that a comparison unit is provided which, on the basis of the respective estimated values for the tool and workpiece parameters, determines a target value for a rotation speed which can be assigned to the rotary drive and a target value for the motor power of the rotary drive using at least one reference data set, and that an adaptation unit is provided which adapts the rotation speed and the motor power of the rotary drive in each case to the determined target value for the rotation speed and to the target value for the motor power of the rotary drive.

**Revendications**

1. Procédé pour faire fonctionner une machine-outil, la force de frottement déplaçant par sollicitation un outil pouvant être déplacé au moyen d'un entraînement de rotation motorisé avec une vitesse d'avancement réglable dans le but d'un enlèvement de matériau dans ou contre une pièce à usiner, dans lequel une valeur déterminants la vitesse d'avancement est déterminée sur la base d'une puissance de moteur agissant sur l'entraînement de rotation,
**caractérisé en ce qu'**une estimation concernant au moins un paramètre caractérisant la pièce, en abrégé paramètre d'outil, et au moins un paramètre caractérisant la pièce, en abrégé paramètre de pièce, sont effectuées sur la base de la puissance de moteur ou d'une valeur dépendante de manière fonctionnelle de cette puissance comme unique grandeur de mesure et de la valeur calculée pour déterminer la vitesse d'avancement, le au moins un paramètre d'outil et le paramètre de pièce caractérisant l'enlèvement de matière, et
**en ce qu'**une valeur de consigne pour un régime pouvant être attribué à l'entraînement de rotation et une valeur de consigne pour la puissance de moteur de l'entraînement de rotation sont déterminées au moins sur la base du paramètre d'outil et du paramètre de pièce en utilisant au moins un ensemble de données de référence.

2. Procédé selon la revendication 1,
**caractérisé en ce que** la grandeur équivalente à la puissance du moteur est un couple pouvant être attribué à un entraînement de rotation.

3. Procédé selon l'une quelconque des revendications 1 à 2,
**caractérisé en ce que** la valeur de consigne déterminée pour le régime pouvant être attribué à l'entraînement de rotation et la valeur de consigne pour la puissance du moteur sont utilisées pour le réglage de la puissance de moteur agissant sur l'entraînement de rotation et son régime.

4. Procédé selon l'une quelconque des revendications 1 à 3,
**caractérisé en ce qu'**un paramètre de géométrie, déterminant l'enlèvement de matière, de l'outil est choisi comme paramètre d'outil.

5. Procédé selon l'une quelconque des revendications 1 à 3,
**caractérisé en ce qu'**un paramètre caractérisant la dureté de la pièce est choisi comme paramètre de pièce.

6. Procédé selon l'une quelconque des revendications 1 à 5,
**caractérisé en ce qu'**un tableau Look-Up est utilisé pour le au moins un ensemble de données de référence.

7. Procédé selon l'une quelconque des revendications 1 à 6,
**caractérisé en ce qu'**une grandeur décrivant de façon quantitative l'enlèvement de matière est déterminée en effectuant un cumul dans le temps pour les valeurs déterminant la vitesse d'avancement.

8. Procédé selon la revendication 7,
**caractérisé en ce qu'**une estimation concernant la position dans l'espace de l'outil par rapport à la pièce est effectuée sur la base de la grandeur déterminant quantitativement l'enlèvement de matière.

9. Procédé selon l'une quelconque des revendications 1 à 8,
**caractérisé en ce qu'**une sondeuse-carotteuse, dans laquelle une couronne de carottage peut être insérée comme outil, est utilisé comme machine-outil et **en ce que** le diamètre de la couronne de carottage est choisi comme paramètre d'outil.

10. Procédé selon l'une quelconque des revendications 1 à 8,
**caractérisé en ce qu'**une machine à lame de scie circulaire, sur laquelle une lame de scie circulaire est poussée dans une pièce, est utilisée comme machine-outil, et **en ce que** la surface de coupe, agissant sur la pièce, de la lame de scie circulaire est choisie comme paramètre d'outil.

11. Procédé selon l'une quelconque des revendications 1 à 10,

**caractérisé en ce que**, pour une évaluation concernant le au moins un paramètre caractérisant un outil et le au moins un paramètre caractérisant la pièce, on effectue à chaque fois une classification dans laquelle les paramètres déterminés indiquent respectivement des classes d'outil ou de pièce, ce qui veut dire que le paramètre caractérisant la pièce indique s'il s'agit de béton ou d'un matériau métallique, et le paramètre caractérisant l'outil indique à quelle classe de grandeur appartient un outil correspondant.

12. Machine-outil, la force de frottement déplaçant par sollicitation une pièce pouvant être mise en rotation au moyen d'un entraînement de rotation motorisé avec une vitesse d'avancement réglable pour l'enlèvement de matière dans ou vers une pièce à usiner, sur laquelle est prévue une unité de réglage, dans laquelle une valeur déterminant la vitesse d'avancement peut être déterminée sur la base d'une puissance de moteur agissant sur l'entraînement de rotation,

**caractérisée en ce qu'**il est prévu un classificateur qui détermine, sur la base d'une unique valeur de capteur, c'est-à-dire la puissance de moteur ou une valeur dépendante de manière fonctionnelle de cette puissance, et de la valeur calculée pour déterminer la vitesse d'avancement, à chaque fois une valeur d'évaluation pour au moins un paramètre caractérisant l'outil, en abrégé paramètre d'outil, et au moins un paramètre caractérisant la pièce, en abrégé paramètre de pièce, et

**en ce qu'**il est prévu une unité de comparaison qui, sur la base des valeurs estimatives respectives pour les paramètres de pièce et d'outil et en utilisant au moins un ensemble de données de référence, détermine une valeur prescrite pour un régime pouvant être attribué à l'entraînement de rotation et une valeur de consigne pour la puissance de moteur de l'entraînement de rotation, et

**en ce qu'**il est prévu une unité d'adaptation qui adapte le régime et la puissance de moteur de l'entraînement de rotation à chaque fois à la valeur de consigne déterminée pour le régime et la valeur de consigne pour la puissance de moteur de l'entraînement de rotation.

EP 1 988 438 B1

Fig. 1

EP 1 988 438 B1

Solldrehzahl
Sollleistung
Vorschubgesch

Motorleistung
Motorstrom
Motorspannung
StatorFrequenz
RotorFrequenz

Fig. 2

12

Fig. 3

**EP 1 988 438 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 9402360
- DE 19632401 A1
- DE 19807899 A1
- DE 10304405 A1
- DE 19622374 A1
- EP 0905593 A1